Europäisches Patentamt

European Patent Office

Office européen des brevets

(11) Publication number: **0 432 961 A2**

## EUROPEAN PATENT APPLICATION

(21) Application number: **90313200.9**

(22) Date of filing: **05.12.90**

(51) Int. Cl.5: **G01S 7/03**

(30) Priority: **15.12.89 GB 8928376**

(43) Date of publication of application:
**19.06.91 Bulletin 91/25**

(84) Designated Contracting States:
**DE FR IT**

(71) Applicant: **Smiths Industries Public Limited Company**
**765, Finchley Road**
London, NW11 8DS(GB)

(72) Inventor: **Andrews, Frank Philip**
**Ogunquit, Chapel Lane, Easton**
**Near Winchester, Hampshire(GB)**

(74) Representative: **Flint, Jonathan McNeill**
**SMITHS INDUSTRIES PUBLIC LIMITED**
**COMPANY 765 Finchley Road**
**London NW11 8DS(GB)**

(54) **Microwave distance measuring apparatus.**

(57) An aircraft altimeter has a planar transmit antenna 2 and receive antenna 3 on the same substrate separated by about 150mm. An oscillator 20 supplies microwave energy in the G-band to the transmit antenna via a pulse modulated amplifier 21. The oscillator also supplies an output via a phase shifter 23 to one input of a mixer 24 the other input of which is supplied with the received signals from the receive antenna 3. The phase shifter 23 is controlled to adjust the phase of the signal supplied to the mixer 24 from the oscillator 20 so that it cancels out the leakage signal caused by direct coupling between the transmit and receive antennas 2 and 3.

Fig.1.

EP 0 432 961 A2

## MICROWAVE DISTANCE MEASURING APPARATUS

This invention relates to microwave distance measuring apparatus having a transmit antenna, a receiver antenna and a continous wave oscillator that supplies microwave energy to the transmit antenna.

The invention is more particularly, but not exclusively, concerned with microwave altimeters such as radar or radio altimeters.

Microwave altimeters operate by measuring the time taken for microwave radiation transmitted from one antenna to be received by another antenna after having been reflected from the ground. The transmitted microwave radiation may be derived from a continuous wave oscillator which may be pulse modulated prior to transmission in the case of pulsed radar altimeters. The received radiation is demodulated by mixing with microwave radiation derived from an independent oscillator which is tuned to the same frequency as that of the transmitter oscillator.

These altimeters have several disadvantages. The use of two independent oscillators makes the altimeters costly and bulky. There is a tendency for the frequency of the oscillators to drift away from each other which necessitates the use of a wide bandwidth and compensating circuits to allow the oscillators to track each other. This decreases the signal-to-noise ratio and thereby reduces the effective sensitivity of the apparatus and limits the heights at which it can be used reliably. Attempts to increase the range of the apparatus require higher transmitter powers which lead to high power consumption and dissipation, thereby requiring more expensive components and increasing the risk of detection of the transmitted signals by external agencies.

Another disadvantage arises, particularly at lower frequencies where the wavelengths are longer. In these circumstances, it is necessary to mount the transmitting and receiving antennas away from one another at distances of about one metre or more. This introduces further losses at both the transmitter and receiver caused by losses introduced by the interconnecting cables. The need to provide two sites for the antennas can make mounting difficult on some aircraft. It would be a considerable advantage to be able to mount both antennas on the same housing.

It is an object of the present invention to provide apparatus that can be used to alleviate these disadvantages.

According to one aspect of the present invention there is provided microwave distance measuring apparatus of the above-specified kind, characterised in that the apparatus includes a mixer, a transmitter circuit between the transmit antenna and the mixer, a receiver circuit between the receive antenna and the mixer, the mixer mixes an output from the receive antenna with microwave energy at a frequency locked to that of the oscillator, and a phase shifter that introduces a phase shift into the transmitter or receiver circuit, such as to cancel the effect of mutual coupling between the transmit and receive antennas.

The frequency locked microwave energy supplied to the mixer is preferably derived from the continuous wave oscillator. Alternatively, the apparatus may include a second continuous wave oscillator phase-locked to the first oscillator, the microwave energy supplied to the mixer being derived from the second oscillator. The phase shifter may be electrically adjustable or mechanically adjustable in which case the phase shifter may be provided by a length of microwave line. The output from the oscillator is preferably pulse modulated before supply to the transmit antenna. The transmit and receive antennas are preferably planar antennas formed on the same substrate and may be mounted on a same face of a housing containing the oscillator, mixer and phase shifter. The transmit and receive antennas may be separated from one another by a distance of about 150mm, and the output of the oscillator may be in the G-band.

An aircraft pulsed radar altimeter, in accordance with the present invention, will now be described, by way of example, with reference to the accompanying drawings, in which:

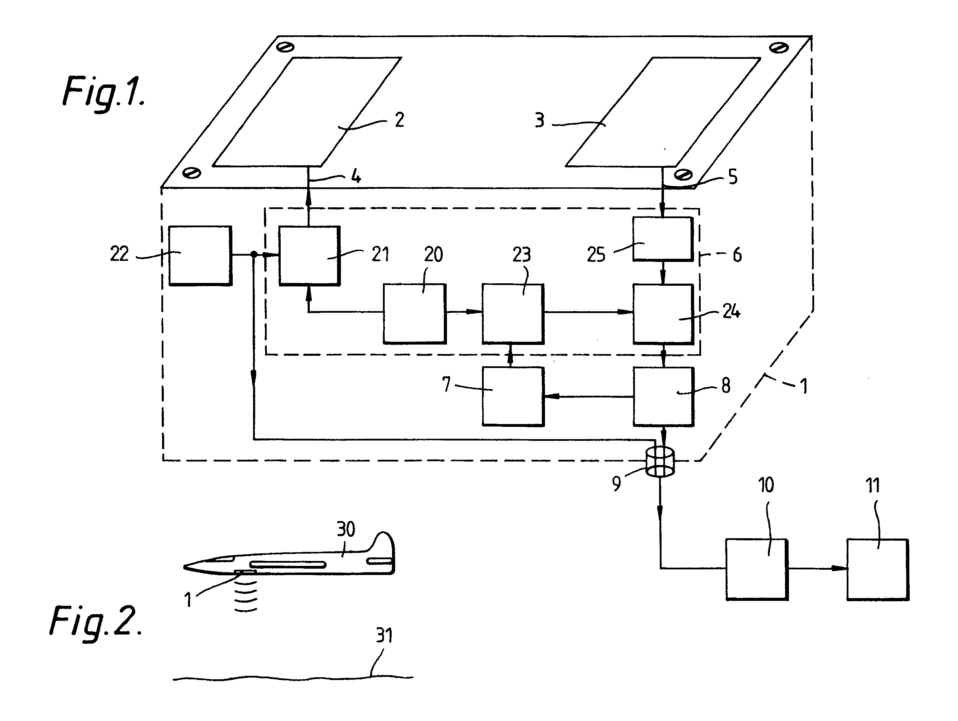

Figure 1    shows the altimeter schematically; and

Figure 2    shows the altimeter on an aircraft.

The altimeter includes a housing 1 on one face of which are mounted the transmit antenna 2 and the receive antenna 3 and which are connected via microwave lines 4 and 5 to a transmit/receive module 6. The housing 1 is mounted on the airframe so that antennas 2 and 3 are directed vertically downwards. The housing 1 also contains a phase controller 7 and a homodyne IF amplifier 8, which receives the output of the module 6. The amplifier 8 provides an electrical output to a connector 9 on the housing 1 which is coupled to a remote tracker 10 that provides an output to a display 11, or other utilization device, in accordance with the height of the aircraft 30 above ground 31.

The two antennas 2 and 3 are identical four-patch, printed, planar antennas formed on the same substrate and separated from one another on the face of the housing 1 by a distance of about 150mm. The transmit antenna 2 is supplied with pulsed microwave energy at 4.3GHz in the G-Band from a continuous wave oscillator 20 via a power amplifier 21 which is pulse modulated by a modulator unit 22.

The output from the oscillator 20 is also supplied via a phase shifter 23 to one input of a balanced diode mixer 24. At its other input, the mixer 24 receives the output from the receive antenna 3 via a low noise amplifier 25. The output from the mixer 24 is supplied to the homodyne amplifier 8 which provides an output to the tracker 10. The tracker 10 also receives an output from the pulse modulator unit 22 in synchronism with the transmitted pulses, the tracker operating in the conventional way to measure the time difference between transmitted and received pulses and provide an output indicative of height accordingly.

The homodyne amplifier 8 also provides an output to the phase controller 7 which electrically controls operation of the phase shifter 23.

In operation, the close spacing between the transmit and receive antennas 2 and 3, and the relatively low frequency and long wavelength ($\lambda$ = 70mm) lead to a high mutual coupling, or leakage, between the transmit and receive antennas. The phase relationship between the receive antenna output, caused by direct coupling, and the transmit antenna output is constant and dependent on the spacing between the two antennas. The homodyne amplifier 8 will detect this high output leakage signal and provides an output to the phase controller 7. This adjusts the phase shift introduced in the oscillator output supplied to the mixer 24 until cancellation occurs of the leakage signal.

It is not essential that an electrically adjustable phase shifter be used. Instead, a mechanical phase shifter could be used, such as taking the form of an fixed or adjustable length of microwave line; this could be introduced between the antenna 3 and amplifier 25, or between the amplifier 25 and the mixer 24, instead of between the oscillator and mixer. In general, the phase shift could be introduced anywhere in either the transmitter or receiver circuits between the respective antenna and the mixer.

Some of the ground return signals received by the antenna 3 will have the same phase relationship to the transmitted signal as does the cancelled leakage signal. Because of this, such ground return signals will also be cancelled. However, this effect is minimal and not significant because of the relatively wide bandwidth of the antennas, the generally uneven nature of ground surface and the fact that, because of its movement, the aircraft does not maintain an exact height above ground to within the wavelength of the radiation. Furthermore, radar altimeter information is time dependent rather than magnitude dependent so that, small variations in magnitude of the mixed signal that might arise as the aircraft height changes between being in phase and out of phase, are not significant.

In conventional microwave altimeters, the receive antenna output is mixed with a signal from an oscillator independent of that used to provide the transmit signal, so that there is no fixed phase relationship between the two signals. It would be possible, by the present invention to use two oscillators, one for transmitting and the other for mixing with the received signal, if these were phase coupled with one another such as in a phase-locked loop circuit. In this way, cancellation of the leakage signal between the transmit and receive antennas is still possible.

The present invention enables the transmit and receive antennas to be much closer spaced than has previously been possible at these frequencies. Conventionally, mutual coupling or leakage between the two antennas is reduced by spacing them at much greater distances, at least about 1000mm, in the G-Band. At higher frequencies where the wavelength is shorter, this is less of a problem, but at frequencies around the G-Band and lower, such as the S-Band, the spacing needed to produce satisfactory isolation is greater. Because the present invention enables a very close spacing to be achieved, it is possible to co-site the two antennas, that is, to print them on the same substrate. They can be mounted on the face of the same housing, thereby considerably facilitating installation in the aircraft and avoiding the need to provide two openings in the aircraft skin.

In previous apparatus it may be possible to reduce the effect of leakage by rapid gating of the received signal. This, however, requires the use of expensive fast-acting components and prevents the apparatus being used reliably at low heights.

Where only one oscillator is used, this gives further significant advantages. Firstly, the overall cost, size and weight of the altimeter is less than where two oscillators are used. There is no need to tune two oscillators to the same frequency, as in previous arrangements, and any change in frequency such as caused by temperature change, vibration or ageing effects does not affect the performance of the altimeter.

Where two independent oscillators are used, in previous equipment, it is necessary to allow for drift in frequencies between the two oscillators. This generally means that a relatively wide bandwidth must be used. Accordingly, to achieve a satisfactory signal-to-noise ratio in conventional altimeters, it is necessary to use a relatively high power or to confine operation to relatively low height. Typically, a 5 watt radar altimeter could only be used reliably up to about 5,000 feet. In the present invention, there is no risk of drift in frequency, either by the use of one oscillator or by the use of two oscillators, phase-locked together. This enables a much narrower bandwidth and hence enables a much longer pulse to be used, so that the altimeter approaches the performance of a continuous wave altimeter. A considerably reduced power output is needed, therefore, with the present invention to produce a satisfactory signal-to-noise ratio. Typically, a 5 watt altimeter of the present invention could operate reliably up to about 50,000 feet.

It will be appreciated that this advantage could be utilized to enable the altimeter to have a lower power output. This can reduce power consumption and heat dissipation; it can enable the use of lower cost components; and it can also reduce the risk of detection in military applications.

The present invention also enables the altimeter to be made frequency agile, that is, the frequency can be varied in time so as to reduce the risk of jamming by external agencies.

The invention is not confined to aircraft altimeters but could find application in other distance measuring apparatus employing microwaves for height or other distance applications.

## Claims

1. Microwave distance measuring apparatus having a transmit antenna, a receive antenna, and a continuous wave oscillator that supplies microwave energy to the transmit antenna, characterised in that the apparatus includes a mixer (24), a transmitter circuit (21, 20, 23) between the transmit antenna (2) and the mixer (24), a receiver circuit (25) between the receive antenna (3) and the mixer (24), that the mixer (24) mixes an output from the receive antenna (3) with microwave energy at a frequency locked to that of the oscillator (20), and a phase shifter (23) that introduces a phase shift into the transmitter or receiver circuit, such as to cancel the effect of mutual coupling between the transmit and receive antennas (2 and 3).

2. Microwave distance measuring apparatus according to Claim 1, characterised in that the frequency locked microwave energy supplied to the mixer (24) is derived from the continuous wave oscillator (20).

3. Microwave distance measuring apparatus according to Claim 1, characterised in that the apparatus includes a second continuous wave oscillator phase-locked to the first oscillator (20), and that the microwave energy supplied to the mixer (24) is derived from the second oscillator.

4. Microwave distance measuring apparatus according to any one of the preceding claims, characterised in that the phase shifter (23) is electrically adjustable.

5. Microwave distance measuring apparatus according to any one of Claims 1 to 3, characterised in that the phase shifter is mechanically adjustable.

6. Microwave distance measuring apparatus according to Claim 5, characterised in that the phase shifter is provided by a length of microwave line.

7. Microwave distance measuring apparatus according to any one of the preceding claims, characterised in that the output from the oscillator (20) is pulse modulated before supply to the transmit antenna (2).

8. Microwave distance measuring according to any one of the preceding claims, characterised in that the transmit and receive antennas (2 and 3) are planar antennas formed on the same substrate.

9. Microwave distance measuring apparatus according to Claim 8, characterised in that the transmit and receive antennas (2 and 3) are mounted on a face of a housing (4) containing the oscillator (20), mixer (24) and phase shifter (23).

10. Microwave distance measuring apparatus according to any one of the preceding claims, characterised in that the transmit and receive antennas (2 and 3) are separated from one another by a distance of about 150mm, and that the output of the oscillator (20) is in the G-band.

EP 0 432 961 A2

**Fig.1.**

**Fig.2.**